# EUROPEAN PATENT SPECIFICATION

(11) **EP 3 624 313 B1**
(45) Date of publication and mention of the grant of the patent: **05.11.2025**
(21) Application number: 18799108.8
(22) Date of filing: 03.04.2018
(51) Int. Cl.: F01P 1/02, F01P 5/02, F02N 15/00, F02N 11/08, F02N 11/00, H02K 11/33, F01P 1/06, H02K 9/04

(54) **DYNAMO-ELECTRIC MACHINE UNIT**
DYNAMO-ELEKTRISCHE MASCHINENEINHEIT
UNITÉ DE MACHINE DYNAMO-ÉLECTRIQUE

(30) Priority: 10.05.2017 JP 2017094208
(43) Date of publication of application: 18.03.2020
(73) Proprietor: Mitsuba Corporation, Kiryu-shi, Gunma 376-8555 (JP); Shindengen Electric Manufacturing Co., Ltd., Tokyo 100-0004 (JP)
(72) Inventor: KANAI, Masaki, Kiryu-shi Gunma 376-8555 (JP); HAGIMURA, Masami, Kiryu-shi Gunma 376-8555 (JP); TSUCHIYA, Yuichi, Kiryu-shi Gunma 376-8555 (JP); OKANO, Toshifumi, Hanno-shi Saitama 357-8585 (JP); INTO, Toru, Hanno-shi Saitama 357-8585 (JP)
(74) Representative: Ipsilon
(86) International application number: PCT/JP2018/014333
(87) International publication number: WO 2018/207505

(56) References cited:
- WO-A1-2016/084590
- WO-A1-2016/204116
- CN-B- 107 078 619
- JP-A- 2009 214 813
- JP-A- 2009 240 071
- JP-A- 2013 072 358
- JP-A- 2013 072 358
- JP-A- 2014 143 833
- JP-A- 2016 111 909
- JP-A- 2016 167 963

## Description

### [Technical Field]

The present invention relates to a rotary electric machine unit.

Priority is claimed on Japanese Patent Application No. 2017-094208 filed May 10, 2017.

### [Background Art]

In the related art, a rotary electric machine that includes two functions, namely an engine starting function and a regenerative power generating function using regenerative energy is known as a rotary electric machine used in a vehicle such as a motorcycle. A rotary electric machine unit of such a type includes a motor section that includes a stator and a rotor and a control section that controls power distribution to the stator.

Although it is conceivable that the motor section and the control section be integrally provided as a unit in such a rotary electric machine, it is necessary to take cooling of the control section into consideration since the control section comes close to the motor section and the like.

Meanwhile, a configuration of a rotary electric machine unit, which includes a motor section and a control section and is used for driving an internal combustion engine, in which the control section is disposed in a cooling air path of the internal combustion engine, is known (see Patent Literature 1, for example).

### [Citation List]

### [Patent Literature]

[Patent Literature 1]
WO 2016/084590 A1

### [Summary of Invention]

### [Technical Problem]

Incidentally, there is a case in which the control section disposed in the cooling air path serves as a flow path resistance for cooling air in the configuration as disclosed in Patent Literature 1. In such a case, although it is possible to effectively cool the control section, there is a probability that the cooling efficiency of the internal combustion engine will be degraded.

In addition, a circuit board and a wiring are needed in order to electrically connect the control section disposed in the cooling air path to the motor section that is provided coaxially with the rotation drive shaft of the internal combustion engine. Therefore, an increase in the number of components of the rotary electric machine unit prevents cost reduction and size reduction of the unit.

Thus, the invention provides a rotary electric machine unit capable of improving cooling efficiency of an internal combustion engine, curbing an increase in the number of components, and realizing cost reduction and size reduction of the unit without degrading cooling efficiency of a control section.

### [Solution to Problem]

The present invention employs the following means in order to solve the aforementioned problem.

That is, according to a first aspect of the invention, there is provided a rotary electric machine unit including: a motor section that has a stator, around which a coil is wound, a rotor that faces the stator and is secured to a rotation drive shaft of an internal combustion engine; and a control section that has a control board that controls power distribution to the stator, in which the rotary electric machine unit is used for driving the internal combustion engine, the control section is secured to the internal combustion engine and is provided such that at least a part of the control section is exposed to a cooling air path of the internal combustion engine, and the motor section is disposed on a side opposite to the internal combustion engine with the control section interposed therebetween.

With such a configuration, the control section is disposed between the internal combustion engine and the motor section. In this manner, it is possible to discharge heat that the control board generates to the inside of the cooling air path. Also, it is possible to discharge heat from the internal combustion engine to the inside of the cooling air path via the control section. In this manner, the control section functions as a cooling element for the internal combustion engine. As a result, it is possible to improve cooling efficiency of the internal combustion engine without degrading cooling efficiency of the control section.

According to a second aspect of the invention, it is preferable that the control section include the control board and a housing that has a recessed section for accommodating the control board, and that the recessed section of the housing be opened to a side of the internal combustion engine, in the rotary electric machine unit according to the first aspect of the invention.

With such a configuration, it is possible to reduce a contact area between the housing and the internal combustion engine without the bottom surface of the recessed section of the housing being brought into contact with the internal combustion engine by the recessed section of the housing facing the side of the internal combustion engine. In this manner, it is possible to curb heat transmission from the internal combustion engine to the control section and to curb increase in a temperature of the control board due to heat from the internal combustion engine.

According to a third aspect of the invention, the control board may be disposed on a side away from the internal combustion engine in the recessed section, and the recessed section may be filled with insulating resin, in the rotary electric machine unit according to the second aspect of the invention.

With such a configuration, an influence of the heat of the internal combustion engine on the control board is curbed by separating the control board from the internal combustion engine. Also, heat transmission of the internal combustion engine is curbed by filling the recessed section with the insulating resin. In this manner, it is possible to curb a temperature rise of the control board due to the heat from the internal combustion engine.

According to a fourth aspect of the invention, a connector receiving section, which is electrically connected to the control board, to which a connector provided at a tip end of an external harness is connected, may be provided in the recessed section in the rotary electric machine unit according to the second or third aspect of the invention.

With such a configuration, it is possible to electrically connect the connector receiving section to the control board in the recessed section of the housing by providing the connector receiving section in the recessed section. In a case in which the connector receiving section is provided such that the connector receiving section faces a side opposite to the opening direction of the recessed section, it is necessary for the connector receiving section to penetrate through the bottom surface of the recessed section of the housing and to be connected to the control board in the recessed section. Meanwhile, the wiring, the terminal, and the like are not caused to penetrate through the bottom surface of the recessed section by disposing the connector receiving section along with the control board in the recessed section. Therefore, it is possible to electrically connect the connector receiving section to the control board.

In addition, the connector receiving section faces the opening direction of the recessed section, that is, on the side of the internal combustion engine. Therefore, it is possible to easily connect the connector at the tip end of the harness to the connector receiving section from the side of the internal combustion engine.

According to a fifth aspect of the invention, the housing may have a peripheral wall section that stands up toward the side of the internal combustion engine on an outer peripheral side of the recessed section, and the connector receiving section may be provided such that the connector receiving section protrudes toward the side of the internal combustion engine beyond the peripheral wall section, in the rotary electric machine unit according to the fourth aspect of the invention.

With such a configuration, it is possible to easily and reliably connect the connector at the tip end of the harness to the connector receiving section from the side of the internal combustion engine due to the connector receiving section protruding toward the side of the internal combustion engine beyond a side wall of the housing.

According to a sixth aspect of the invention, the housing may include a plurality of punched sections formed in a surface that faces the side of the internal combustion engine such that the punched sections are recessed in a direction away from the side of the internal combustion engine, and ribs that stand up from bottom surfaces of the punched sections toward the side of the internal combustion engine may be formed between mutually adjacent punched sections, in the rotary electric machine unit according to any one of the second to fifth aspects of the invention.

With such a configuration, it is possible to realize weight reduction of the unit by forming the punched sections. Also, it is possible to increase the front surface area of the housing and thereby to increase heat discharging properties of heat generated by the control board and heat delivered from the internal combustion engine. Also, it is possible to reduce a contact area of the housing with respect to the internal combustion engine and to reduce the amount of heat transmitted from the internal combustion engine by forming the ribs.

According to a seventh aspect of the invention, the housing of the control section may include a main section that is interposed between the internal combustion engine and the motor section, and an exposed section that protrudes from the main section toward the outside of the rotation drive shaft in a radial direction and is exposed to the cooling air path, in the rotary electric machine unit according to any one of the second to sixth aspects of the invention.

With such a configuration, it is possible to discharge the heat generated by the control board and the heat transmitted from the internal combustion engine to the housing to the inside of the cooling air path due to the exposed section that forms a part of the control section being exposed to the inside of the cooling air path. In this manner, cooling efficiency of the control section is further improved.

According to an eighth aspect of the invention, the exposed section may have a planar section that forms a part of an inner wall surface of the cooling air path in the rotary electric machine unit according to the seventh aspect of the invention.

With such a configuration, it is possible to efficiently cause the heat generated by the control board and the heat transmitted from the internal combustion engine to the housing to be radiated to the inside of the cooling air path due to the planar section forming a part of the inner wall surface of the cooling air path. In addition, it is possible to curb protrusion of the control section to the inside of the cooling air path and an increase in the flow path resistance for the cooling air.

According to a ninth aspect of the invention, fins may be provided on the planar section in the rotary electric machine unit according to the eighth aspect of the invention.

With such a configuration, the fins rectify the cooling air and curbs an increase in the flow path resistance for the cooling air, and it is thus possible to further improve cooling efficiency of the control section. Also, the area in which the housing is brought into contact with the cooling air becomes larger due to the fins, and it is thus possible to improve the cooling effect.

According to a tenth aspect of the invention, a terminal that penetrates through a bottom surface of a recessed section that is provided in the housing on a side away from the internal combustion engine, that has one end that is electrically connected to the control board in the recessed section, and that has the other end that protrudes from the bottom surface of the recessed section toward a side of the motor section and is electrically connected to the coil of the motor section may be provided in the rotary electric machine unit according to any one of the second to ninth aspects of the invention.

With such a configuration, the control board and the coil of the stator are directly connected to each other with the terminal that penetrates through the bottom surface of the recessed section. Meanwhile, it is necessary to use a connection wiring that bypasses the housing if it is attempted to connect the control board that is accommodated in the recessed section of the housing to the coil of the stator without using the terminal. Therefore, utilization of such a connection wiring is eliminated by connecting the control board to the coil of the stator via the terminal.

According to an eleventh aspect of the invention, a sensor that detects a position of the rotation drive shaft in a rotation direction may be secured to the housing in the rotary electric machine unit according to any one of the second to tenth aspects of the invention.

Typically, the sensor is secured to the stator of the motor section in many cases. In a case in which the sensor is secured to the stator, the sensor detects the position of the rotor in the rotation direction, and the position of the rotation drive shaft in the rotation direction is thus indirectly detected. Therefore, manufacturing errors of the stator of the motor section, the control section, and the like and assembly errors affect a positional relationship between the sensor and an axis that is coaxial with the rotation axis. On the other hand, it is possible to reduce manufacturing errors and assembly errors by securing the sensor to the housing of the control section.

### [Advantageous Effects of Invention]

According to the aforementioned rotary electric machine unit, it is possible to improve cooling efficiency of the internal combustion engine without degrading cooling efficiency of the control section. Also, it is possible to curb an increase in the number of components and to realize cost reduction and size reduction of the unit.

### [Brief Description of Drawings]

Fig. 1 is an explanatory diagram illustrating an arrangement structure of an engine unit that includes a rotary electric machine unit according to an embodiment of the invention.
Fig. 2 is a sectional view of the rotary electric machine unit according to the embodiment of the invention.
Fig. 3 is a perspective view of a control section of the rotary electric machine unit according to the embodiment of the invention when seen from a motor section.
Fig. 4 is a perspective view of the control section of the rotary electric machine unit according to the embodiment of the invention in a state in which insulating resin is omitted when seen from the side of the engine.
Fig. 5 is a perspective view of the control section of the rotary electric machine unit according to the embodiment of the invention when seen from the side of the engine.
Fig. 6 is a perspective view of a control section of the rotary electric machine unit according to a modification example of the embodiment of the invention when seen from a motor section.
Fig. 7 is a diagram of a control section of a rotary electric machine according to another modification example of the embodiment of the invention when seen from a motor section.
Fig. 8 is a diagram of a control section and a stator of a rotary electric machine unit according to another modification example of the embodiment of the invention when seen from the outside of the stator in a radial direction.

### [Description of Embodiments]

Next, a rotary electric machine unit according to an embodiment of the invention will be described with reference to drawings.

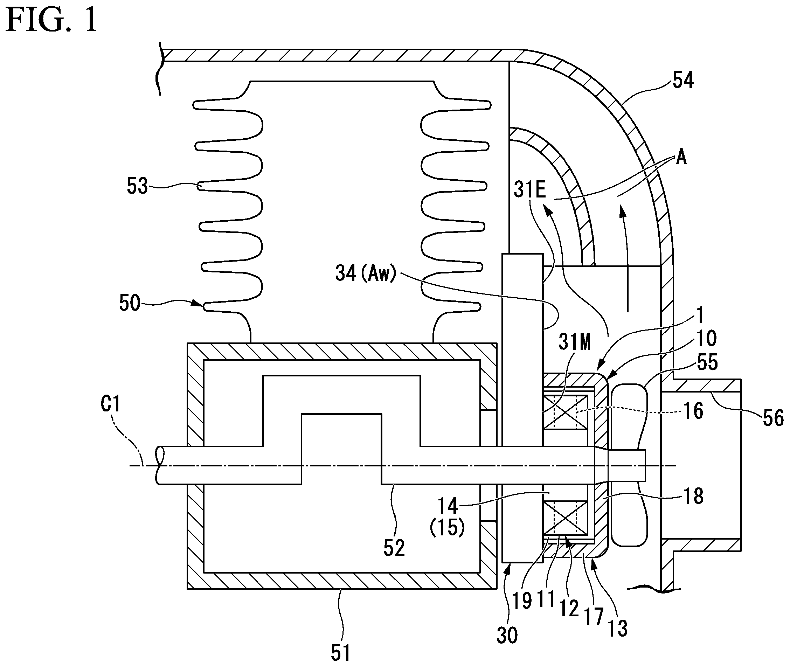

Fig. 1 is an explanatory diagram illustrating an arrangement structure of an engine unit that includes a rotary electric machine unit 1 according to the embodiment of the invention.

As illustrated in Fig. 1, the rotary electric machine unit 1 includes a motor section 10 that includes a stator 12, around which a coil 11 is wound, and a rotor 13 that faces the stator 12 and is secured to a crankshaft 52 of an engine 50, and a control section 30 that controls power distribution to the stator 12. The line C1 in the drawing represents a center axis of the crankshaft 52.

The motor section 10 is a motor of an outer rotor-type that is used in a vehicle such as a motorcycle, for example, and that functions as a starter motor when the engine 50 is started, and functions as a power generator after the engine 50 is started.

The engine 50 has the crankshaft 52 in a crankcase 51 such that the crankshaft freely rotates.

A cylinder 53 is connected to the crankcase 51. A piston, which is not illustrated in the drawing, is accommodated in the cylinder 53. The piston is coupled to the crankshaft 52 via a connecting rod, which is also not illustrated in the drawing.

The engine 50 has an engine cover 54 that covers the crankcase 51, the cylinder 53, and the rotary electric machine unit 1. A cooling air inlet port 56 for cooling the cylinder 53 is provided at the engine cover 54. The cooling air inlet port 56 faces, in an axial direction, a turning blade 55 for cooling that is attached to an axial end portion of the crankshaft 52 along with the rotor 13.

The turning blade 55 is a sirocco fan, for example. The turning blade 55 rotates with rotation of the crankshaft 52 and introduces air from the cooling air inlet port 56 into the engine cover 54. The air introduced into the engine cover 54 is distributed through a cooling air path A that extends from the cooling air inlet port 56 to the surroundings of the cylinder 53 and is then exhausted to the outside of the engine cover 54 via an exhaust port, which is not illustrated in the drawing.

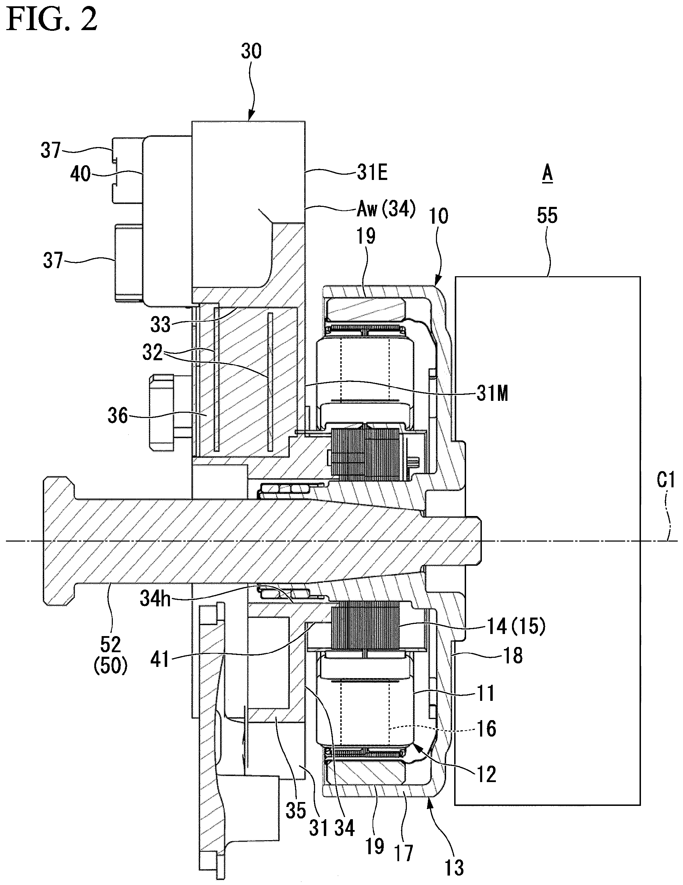

Fig. 2 is a sectional view of the rotary electric machine unit according to the embodiment of the invention.

As illustrated in Fig. 2, the stator 12 includes a stator core 14 that is formed by laminating electromagnetic steel plates and a plurality of coils 11 that are wound around the stator core 14 via an insulator, which is not illustrated in the drawing. The stator core 14 has a main body 15 that is formed into an annular shape and a plurality of teeth 16 that radially protrudes from an outer circumferential surface of the main body 15 toward the outside in the radial direction. The teeth 16 are formed into a substantially T shape in a plan view in the axial direction of the stator 12. The teeth 16 extend in the radial direction of the stator 12, and the coils 11 are wound therearound.

The rotor 13 includes a rotor yoke 17 that is made of a magnetic material that is formed into a cylindrical shape with a bottom such that the rotor yoke 17 covers the stator 12 from the outside and a boss section 18 that is provided at the bottom of the rotor yoke 17. The crankshaft 52 of the engine 50 is merged with the boss section 18 such that the crankshaft 52 can rotate integrally with the boss section 18.

A plurality of magnets 19 are attached to an inner circumferential surface of the rotor 13 at equal intervals in a circumferential direction. These magnets 19 have inner surfaces that are magnetized to be either an N pole or an S pole.

The coils 11 are wound around the stator core 14 such that there is a predetermined wire diameter and a predetermined number of times of winding, are collected into three systems, and are drawn from the stator 12. The coils 11 are respectively electrically connected to the control section 30 via three-phase terminals 71A, 71B, and 71C, which will be described later.

As illustrated in Fig. 1, the control section 30 is disposed between the engine 50 and the motor section 10 in the direction of the center axis C1. That is, the control section 30 is secured to the crankcase 51 of the engine 50. The motor section 10 is disposed on a side opposite to the engine 50 with the control section 30 interposed therebetween.

The control section 30 causes the rotor 13 and the crankshaft 52 to rotate by controlling power distribution to the coils 11 at a predetermined timing when the engine 50 is started. Unlike this, the control section 30 charges an accessory device such as a battery, which is not illustrated in the drawing, with electrical power generated with the rotation of the rotor 13 or directly uses the electrical power for a lighting device such as a light after the engine 50 is started.

As illustrated in Fig. 2, the control section 30 includes a housing 31 and control boards 32 on which a variety of electronic elements that are not illustrated in the drawing are mounted.

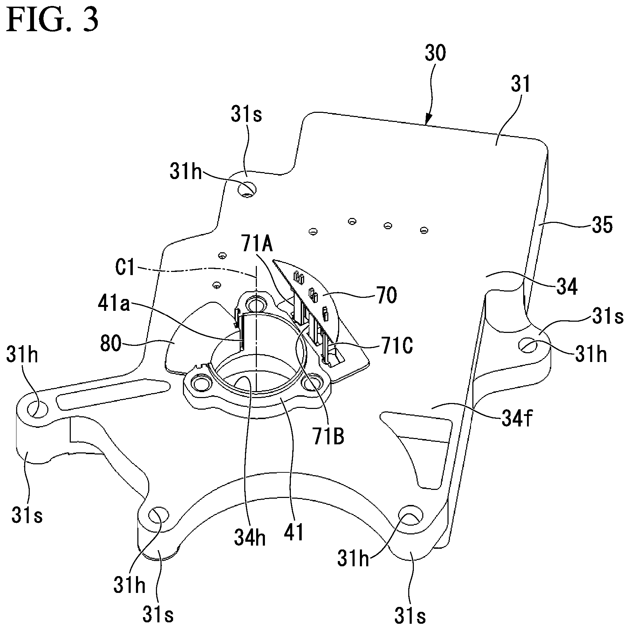

Fig. 3 is a perspective view of the control section of the rotary electric machine unit according to the embodiment of the invention when seen from the motor section.

As illustrated in Figs. 2 and 3, the housing 31 has a base section 34 that is positioned in a plane that perpendicularly intersects the center axis C1 of the crankshaft 52 on the side of the motor section 10 away from the crankcase 51 of the engine 50. The base section 34 has a plate shape. A shaft insertion hole 34h through which the crankshaft 52 is inserted is formed at the substantially center of the base section 34 such that the shaft insertion hole 34 penetrates through the base section 34 in the direction of the center axis C1.

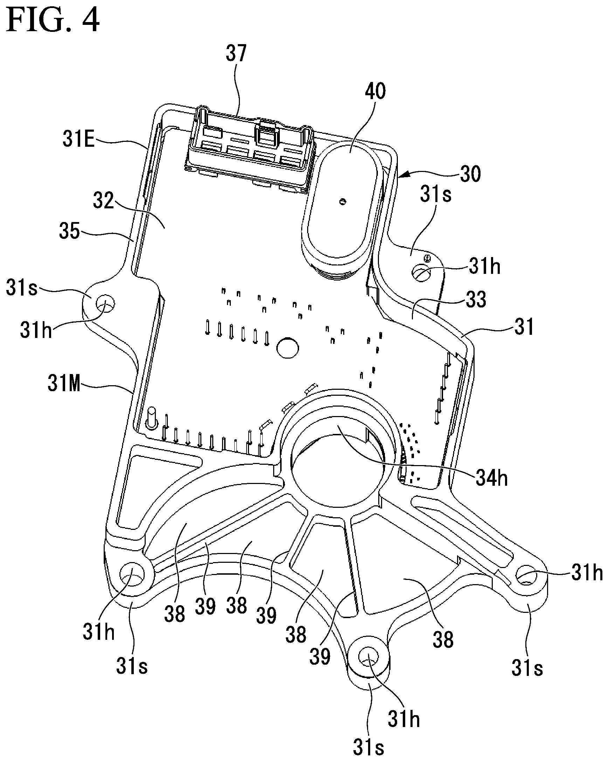

Fig. 4 is a perspective view of the control section of the rotary electric machine unit according to the embodiment of the invention in a state in which the insulating resin is omitted when seen from the side of the engine.

As illustrated in Figs. 2 and 4, the housing 31 has a recessed section 33 that is opened on the side of the crankcase 51 of the engine 50 in order to accommodate the control boards 32. The recessed section 33 has a portion of the aforementioned base section 34 that is provided on the side of the housing 31 away from the engine 50, that is, on the side of the motor section 10 and a peripheral wall section 35 that stands up from the base section 34 toward the side of the engine 50 on the outer peripheral side of the recessed section 33. In this manner, the recessed section 33 is formed such that the recessed section 33 is surrounded by a part of the base section 34 and the peripheral wall section 35.

Stays 31s that protrude outward are provided at a plurality of locations at an outer peripheral portion of the housing 31. The housing 31 of the control section 30 is secured to the crankcase 51 by a bolt (not illustrated) that is inserted into the insertion hole 31h formed at each of the stays 31s being fastened to the crankcase 51.

In addition, a plurality of punched sections 38 that are recessed in a direction away from the side of the engine 50 are formed in a surface of the base section 34 of the housing 31 that faces the side of the engine 50 at a portion that extends outward beyond the peripheral wall section 35. In this manner, ribs 39 that stand up toward the side of the engine 50 are formed at the base section 34 between mutually adjacent punched sections 38. The respective ribs 39 extend radially outward in the radial direction from the shaft insertion holes 34h formed in the housing 31.

As illustrated in Figs. 1 and 2, the aforementioned housing 31 includes a main section 31M that is interposed between the engine 50 and the motor section 10 and an exposed section 31E that protrudes outward in the radial direction of the crankshaft 52 from the main section 31M. At the exposed section 31E, the base section (planar section) 34 is exposed to the cooling air path A and forms a part of an inner wall surface Aw of the cooling air path A.

As illustrated in Figs. 2 and 3, the control boards 32 are accommodated in the recessed section 33. In the embodiment, a plurality of (two) control boards 32 are laminated at an interval in the direction of the center axis C1 in the recessed section 33.

These control boards 32 are disposed on the side of the base section 34 that is the side away from the engine 50 in the recessed section 33.

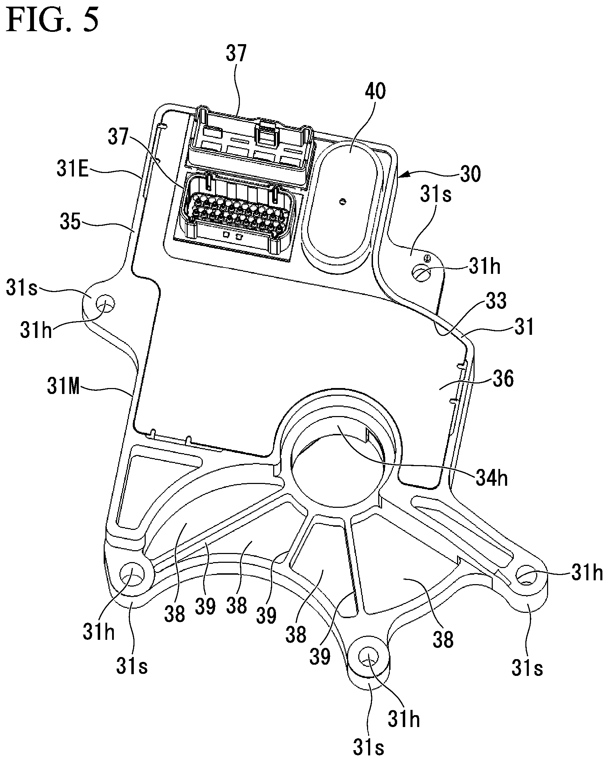

Fig. 5 is a perspective view of the control section of the rotary electric machine unit according to the embodiment of the invention when seen from the side of the engine.

As illustrated in Figs. 2 and 5, the inside of the recessed section 33 of the control boards 32 is filled with the insulating resin 36, and the control boards 32 are covered with the insulating resin 36.

In addition, a connector receiving section 37 to which a connector provided at a tip end of an external harness (not illustrated) is connected is provided in the recessed section 33. The connector receiving section 37 is electrically connected to the control boards 32 in the recessed section 33.

The connector receiving section 37 is disposed at the exposed section 31E away from the shaft insertion hole 34h to the outside in the radial direction in the recessed section 33 surrounded by the peripheral wall section 35.

In addition, the connector receiving section 37 and a cover 40 of a condenser that is mounted on the control boards 32 are provided such that the connector receiving section 37 and the cover 40 protrude toward the side of the engine 50 in the direction of the center axis C1 beyond the peripheral wall section 35 and the insulating resin 36.

In this manner, it is possible to easily connect the connector provided at the tip end of the harness to the connector receiving section 37 from the side of the engine 50 by the connector receiving section 37 protruding to the side of the engine 50.

As illustrated in Fig. 3, a boss 41 to which the stator 12 of the motor section 10 is secured is formed on a front surface 34f of the base section 34 of the housing 31 that faces the side of the motor section 10 away from the engine 50 such that the boss 41 protrudes toward the side of the outer peripheral side of the shaft insertion hole 34h. In this manner, it is possible to directly secure the stator 12 of the motor section 10 to the housing 31.

In addition, the three-phase terminals 71A, 71B, and 71C are provided on the outer peripheral side of the boss 41 on the front surface 34f of the base section 34 such that the three-phase terminals 71A, 71B, and 71C are insulated from the stator via an insulator 70. The respective terminals 71A, 71B, and 71C respectively penetrate through the base section 34, one end of each of the terminals 71A, 71B, and 71C is electrically connected to the control boards 32 in the recessed section 33, and the other end thereof protrudes from the base section 34 toward the side of the motor section 10 and is electrically connected to the coils 11 of the motor section 10.

The control boards 32 and the coils 11 of the stator 12 are directly connected to each other with such terminals 71A, 71B, and 71C. Meanwhile, in a case in which the control boards 32 in the recessed section 33 and the coils 11 are connected without using the terminals 71A, 71B, and 71C, it is necessary to provide the connection wiring such that the connection wiring bypasses the housing 31. In contrast, the control boards 32 and the coils 11 of the stator 12 are connected via the respective terminals 71A, 71B, and 71C using the aforementioned terminals 71A, 71B, and 71C without using the connection wiring.

In addition, a three-phase position detecting sensor 80 that detects the position of the crankshaft 52 in the rotation direction is provided at the control section 30. The position detecting sensor 80 is fitted into a recessed section 41a that is formed by cutting a part of the boss 41 provided in the housing 31 in a circumferential direction. A sensor magnet (not illustrated) is provided at a position, which faces the position detecting sensor 80, of the crankshaft 52.

The position detecting sensor 80 detects the rotation position of the crankshaft 52 by detecting a change in a magnet flux of the sensor magnet that occurs with rotation of the crankshaft 52. A rotation position signal of the crankshaft 52 detected by the position detecting sensor 80 is taken by the control section 30. The rotation position signal of the crankshaft 52 is for controlling an ignition timing of the engine 50 and controlling a commutation timing of the coils 11 using the control section 30.

Typically, the position detecting sensor is secured to the stator 12 of the motor section 10 in many cases. In a case in which the position detecting sensor is provided at the stator 12, the position detecting sensor indirectly detects the position of the crankshaft 52 in the rotation direction by detecting the position of the rotor 13 in the rotation direction. Therefore, the positional relationship between the position detecting sensor 80 and the crankshaft 52 is affected by manufacturing errors and assembly errors of the stator 12 of the motor section 10, the control section 30, and the like. Meanwhile, it is possible to reduce the manufacturing errors and the assembly errors by securing the position detecting sensor 80 to the housing 31 of the control section 30 as described above.

The control section 30 as described above is disposed between the engine 50 and the motor section 10. In this manner, heat generated by the control boards 32 and heat transmitted from the engine 50 are discharged to the inside of the cooling air path A via the housing 31.

Here, since the recessed section 33 of the housing 31 faces the side of the engine 50, the base section 34 of the housing 31 is not in contact with the engine 50, and a contact area between the housing 31 and the engine 50 is reduced. In this manner, heat transmission from the engine 50 to the control section 30 is curbed, and it is possible to curb a temperature rise of the control boards 32 due to the heat from the engine 50.

In this manner, it is possible to improve cooling efficiency of the engine 50 without degrading the cooling efficiency of the control section 30.

Also, it is not necessary to provide a member such as a wiring for connecting the control section 30 to the motor section 10 by disposing the control section 30 between the engine 50 and the motor section 10. Therefore, it is possible to curb an increase in the number of components and to realize cost reduction and size reduction of the unit.

In this manner, the control section 30 of the aforementioned rotary electric machine unit 1 is disposed between the engine 50 and the motor section 10. Also, the rotary electric machine unit 1 is provided such that at least a part thereof is exposed to the cooling air path A of the engine 50. In this manner, it is possible to discharge the heat from the engine 50 and the heat generated by the control boards 32 to the inside of the cooling air path A. In This manner, the control section 30 functions as an element for cooling the engine 50. Therefore, it is possible to improve cooling efficiency of the engine 50 without degrading cooling efficiency of the control section 30.

The base section 34 of the recessed section 33 of the housing 31 is not in contact with the engine 50 by the recessed section 33 of the housing 31 being inclined toward the side of the engine 50, and it is thus possible to reduce the contact area between the housing 31 and the engine 50. In this manner, it is possible to curb heat transmission from the engine 50 to the control section 30 and to curb a temperature rise of the control boards 32 due to heat from the engine 50.

Since the control boards 32 are disposed on the side away from the engine 50 in the recessed section 33, it is possible to curb heats of the engine 50 affecting the control boards 32. Also, it is possible to curb heat transmission from the engine 50 by filling the recessed section 33 with the insulating resin 36. In this manner, it is possible to curb a temperature rise of the control boards 32 due to the heat from the engine 50.

It is possible to electrically connect the connector receiving section 37 to the control board 32 in the recessed section 33 of the housing 31 by providing the connector receiving section 37 in the recessed section 33. In this manner, a wiring, a terminal, and the like are not caused to penetrate through the base section 34 of the recessed section 33 by disposing the connector receiving section 37 along with the control boards 32 in the recessed section 33. It is possible to electrically connect the connector receiving section 37 to the control board 32 in this state.

Since the connector receiving section 37 faces the opening direction of the recessed section 33, that is, the side of the engine 50, it is possible to easily connect the connector at the tip end of the harness to the connector receiving section 37 form the side of the engine 50.

It is possible to easily and reliably connect the connector at the tip end of the harness to the connector receiving section 37 from the side of the engine 50 by causing the connector receiving section 37 to protrude toward the side of the engine 50 beyond the peripheral wall section 35 of the housing 31.

It is possible to realize weight reduction of the unit by forming the punched sections 38 in the surface of the housing 31 that faces the side of the engine 50. Also, it is possible to increase the front surface area of the housing 31 and to improve heat discharging properties of the housing 31. Also, it is possible to reduce the contact area of the housing 31 with respect to the engine 50 and to reduce the amount of heat transmitted from the engine 50 by forming the ribs 39.

It is possible to radiate the heat transmitted from the engine 50 and the control boards 32 to the housing 31 to the inside of the cooling air path A by the exposed section 31E that forms a part of the housing 31 of the control section 30 being exposed to the inside of the cooling air path A. In this manner, cooling efficiency of the rotary electric machine unit 1 is improved.

It is possible to efficiently radiate heat transmitted from the engine 50 to the housing 31 to the inside of the cooling air path A by forming the exposed section 31E forming a part of the inner wall surface Aw of the cooling air path A. Also, it is possible to curb the control section 30 projecting to the inside of the cooling air path A and to curb an increase in the cooling air flow path resistance.

The control boards 32 and the coils 11 of the stator 12 are directly connected to each other by providing the terminals 71A, 71B, and 71C that penetrate through the base section 34. Therefore, it is possible to connect the control boards 32 to the coils 11 of the stator 12 via the respective terminals 71A, 71B, and 71C without using another connection wiring.

The position detecting sensor 80 can directly detect the position of the crankshaft 52 in the rotation direction as compared with a case in which the position detecting sensor 80 is secured to the stator 12 of the motor section 10 by being secured to the housing 31. In this manner, it is possible to reduce manufacturing errors and assembly errors.

### (Modification example of embodiment)

Note that although the housing 31 of the control section 30 is exposed to the cooling air path A at the exposed section 31E and forms a part of the inner wall surface Aw of the cooling air path A in the aforementioned embodiment, the front surface 34f or the like of the base section 34 of the housing 31 may not be a flat smooth surface.

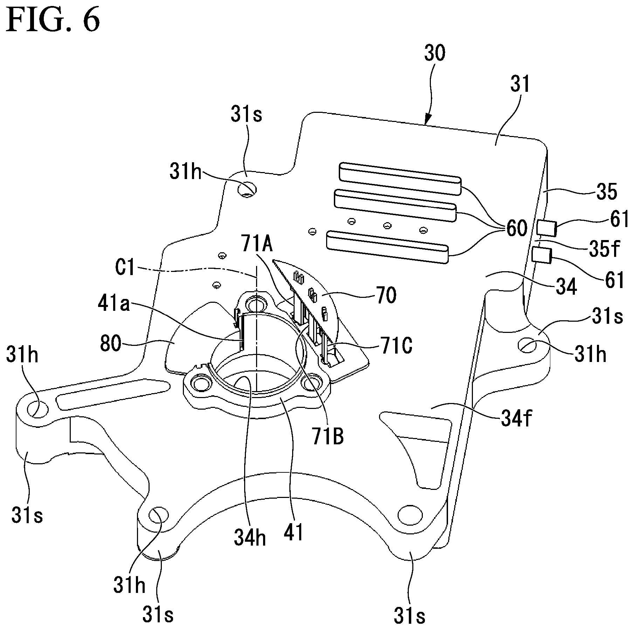

Fig. 6 is a perspective view of the control section of the rotary electric machine unit according to a modification example of the embodiment of the invention when seen from the motor section.

As illustrated in Fig. 6, for example, fins 60 and 61 may be provided at the front surface 34f of the base section 34 of the housing 31 that is exposed to the cooling air path A at the exposed section 31E and an outer surface 35f of the peripheral wall section 35 of the housing 31.

With such a configuration, the fins 60 and 61 rectify the cooling air and curb an increase in the cooling air flow path resistance, and it is thus possible to further improve cooling efficiency of the engine 50 without degrading cooling efficiency of the control section 30. Also, the front surface area in which the housing 31 is in contact with the cooling air increases due to the fins 60 and 61, and it is thus possible to further improve the cooling effect of the control section 30.

### (Another modification of embodiment)

Although the position detecting sensor 80 detects a change in a magnetic flux of the sensor magnet (not illustrated) provided at the crankshaft in the aforementioned embodiment, the invention is not limited thereto.

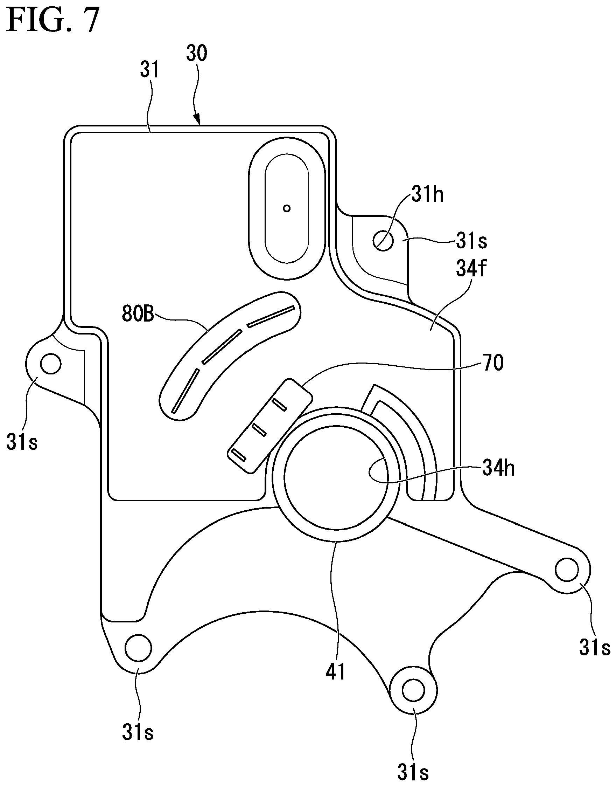

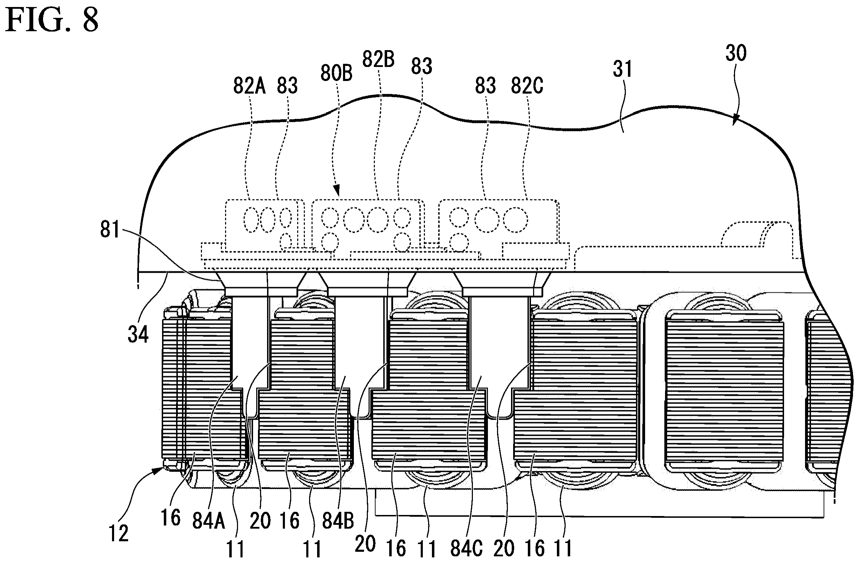

Fig. 7 is a diagram of the control section of the rotary electric machine unit according to another modification example of the embodiment of the invention when seen from the motor section. Fig. 8 is a diagram of the control section and the stator of the rotary electric machine unit according to another modification example of the embodiment of the invention when seen from the outside in the radial direction of the stator.

As illustrated in Figs. 7 and 8, for example, the rotation position of the rotor 13 may be detected by a position detecting sensor 80B detecting a change in a magnetic flux of a magnet 19 provided at the rotor 13.

As illustrated in Fig. 8, the position detecting sensor 80B is disposed at an outer circumferential portion of the stator core 14 of the stator 12. The position detecting sensor 80B is formed of a sensor case 81 made of resin and three circuit boards 82A, 82B, and 82C that are accommodated in the sensor case 81.

Each of the circuit boards 82A, 82B, and 82C is formed into a substantially T shape and has a base section 83 that extends in the circumferential direction of the stator 12 and an insertion section (not illustrated) that extends in the center axis C1 from the base section 83 and is inserted into the sensor case 81.

Hall ICs (not illustrated) are mounted on the respective insertion sections of the circuit boards 82A, 82B, and 82C.

The base sections 83 of the circuit boards 82A, 82B, and 82C penetrate through the base section 34 of the housing 31 and are electrically connected to the control boards 32 in the recessed section 33.

The sensor case 81 is formed of resin and includes sensor holders 84A, 84B, and 84C in which the respective circuit boards 82A, 82B, and 82C are accommodated.

Notch sections 20 are formed at a part of the teeth 16 of the stator 12. The notch sections 20 are formed such that the notch sections 20 form substantially rectangular-shaped fitting grooves over two adjacent teeth 16 that are adjacent in a circumferential direction. In addition, pairs of the notch sections 20 that form the fitting grooves are successively disposed at a total of three locations in the circumferential direction.

The sensor holders 84A, 84B, and 84C are fitted to the notch sections 20 provided at the stator 12.

As illustrated in Fig. 2, a plurality of magnets 19 are attached to the inner circumferential surface of the rotor 13 at equal intervals in the circumferential direction. The hall ICs of the respective circuit boards 82A, 82B, and 82C illustrated in Fig. 8 detect switching of the magnetic flux of the magnet 19 with rotation of the rotor 13. A rotation position signal of the rotor 13 detected by the position detecting sensor 80 is taken by the control section 30, and the control section 30 controls an ignition timing of the engine 50 and controls a commutation timing of the coils 11.

For example, the case in which the rotary electric machine unit 1 is used in a vehicle such as a motorcycle has been described. However, the invention is not limited thereto, and it is possible to apply the rotary electric machine unit 1 to various vehicles or the like that have engines.

### [Industrial Applicability]

According to the aforementioned rotary electric machine unit, it is possible to improve cooling efficiency of the internal combustion engine without degrading cooling efficiency of the control section. Also, it is possible to curb an increase in the number of components and to realize cost reduction and size reduction of the unit.

### [Reference Signs List]

1 Rotary electric machine unit
10 Motor section
11 Coil
12 Stator
13 Rotor
30 Control section
31 Housing
31E Exposed section
31M Main section
32 Control board
33 Recessed section
34 Base section (bottom surface, planar section)
34f Front surface
35 Peripheral wall section
36 Insulating resin
37 Connector receiving section
38 Punched section
39 Rib
50 Engine (internal combustion engine)
51 Crankcase
52 Crankshaft (rotation drive shaft)
60, 61 Fin
71A, 71B, 71C Terminal
80, 80B Position detecting sensor (sensor)
A Cooling air path
Aw inner wall surface
C1 Center axis

## Claims

1. A rotary electric machine unit (1) comprising:
a motor section (10) that has a stator (12), around which a coil (11) is wound, a rotor (13) that faces the stator (12) and is secured to a rotation drive shaft (52) of an internal combustion engine (50); and
a control section (30) that has a control board (32) that controls power distribution to the stator (12),
wherein the rotary electric machine unit (1) is used for driving the internal combustion engine (50),
**characterized in that**
the control section (30) includes a base section (34) that has a plate shape and is secured to a rotation drive shaft case (51) in which the rotation drive shaft (52) is accommodated,
the base section (34) is disposed at a position between the rotation drive shaft case (51) and the motor section (10) and has a recessed section (33) that is formed on a surface at the rotation drive shaft case side and in which the control board (32) is provided,
the recessed section (33) is surrounded by a part of the base section (34) at the side of the motor section (10) and a peripheral wall section (35) that stands up from the base section (34) toward the side of the engine (50), and
the base section (34) is extended from a position at an end part of the rotation drive shaft case (51) to the surrounding of a cylinder (53) of the internal combustion engine (50), and constitutes a part of a wall that forms an inner wall surface (Aw) of a path (A) for a cooling air to be introduced into the cylinder (53).

2. The rotary electric machine unit according to claim 1, wherein
the base section (34) includes a board-side connector (37) to which a connector provided at an external harness is connected, and
an end part of the board-side connector (37) protrudes from the surface at the rotation drive shaft case side of the base section (34).

3. The rotary electric machine unit according to claim 1 or 2, wherein
the base section (34) includes an insertion hole (34h) through which the rotation drive shaft (52) is inserted, and a plurality of another recessed sections (38) formed on the surface at the rotation drive shaft case side.

4. The rotary electric machine unit according to any one of claims 1 to 3, wherein the base section (34) includes a plurality of fins (60) that are provided at a part that constitutes a part of the wall that forms the path (A) for the cooling air.

5. The rotary electric machine unit according to any one of claims 1 to 4, wherein
a terminal (71A, 71B, 71C) mounted on the control board (32) penetrates through the base section (34) and protrudes toward the motor section (10),
the coil (11) of the motor section (10) is electrically connected to the terminal (71A, 71B, 71C).

6. The rotary electric machine unit according to any one of claims 1 to 5, wherein a sensor (80, 80B) that detects a position of the rotation drive shaft (52) in a rotation direction is secured to the base section (34).

## Patentansprüche

1. Rotierende elektrische Maschineneinheit (1), umfassend:
einen Antriebsabschnitt (10), der einen Stator (12), um welchen eine Spule (11) gewickelt ist, einen Rotor (13) aufweist, welcher dem Stator (12) zugewandt ist und an einer rotierenden Antriebswelle (52) eines Verbrennungsmotors (50) befestigt ist; und
einen Steuerabschnitt (30), der eine Steuerplatine (32) aufweist, welche die Stromabgabe an den Stator (12) steuert,
wobei die rotierende elektrische Maschineneinheit (1) zum Antrieb des Verbrennungsmotors (50) verwendet wird,
**dadurch gekennzeichnet, dass**
der Steuerabschnitt (30) einen Basisabschnitt (34) beinhaltet, der plattenförmig ist und an einem Gehäuse (51) der rotierenden Antriebswelle befestigt ist, in welchem die rotierende Antriebswelle (52) aufgenommen ist,
der Basisabschnitt (34) an einer Position zwischen dem Gehäuse (51) der rotierenden Antriebswelle und dem Antriebsabschnitt (10) angeordnet ist und hat einen zurückgesetzten Abschnitt (33) aufweist, welcher auf einer Oberfläche seitens des Gehäuses der rotierenden Antriebswelle ausgebildet ist und in welchem die Steuerplatine (32) vorgesehen ist,
der zurückgesetzte Abschnitt (33) seitens des Antriebsabschnitts (10) von einem Teilbereich des Basisabschnitts (34) sowie von einem umlaufenden Wandabschnitt (35) umgeben ist, welcher vom Basisabschnitt (34) zur Seite des Motors (50) hinauf ragt, und
der Basisabschnitt (34) sich von einer Position an einem endständigen Teilbereich des Gehäuses (51) der rotierenden Antriebswelle bis zur Umgebung eines Zylinders (53) des Verbrennungsmotors (50) erstreckt und einen Teilbereich einer Wand bildet, die eine Innenwandfläche (Aw) eines Weges (A) bildet, über welchen Kühlungsluft in den Zylinder (53) eingeführt wird.

2. Rotierende elektrische Maschineneinheit nach Anspruch 1, wobei
der Basisabschnitt (34) einen platinenseitigen Steckverbinder (37) beinhaltet, an den ein Steckverbinder angeschlossen ist, welcher an einem externen Kabelbaum vorgesehen ist, und
ein endständiger Teilbereich des platinenseitigen Steckverbinders (37) aus der Oberfläche hervorsteht, die sich seitens des Gehäuses der rotierenden Antriebswelle des Basisabschnitts (34) befindet.

3. Rotierende elektrische Maschineneinheit nach Anspruch 1 oder 2, wobei
die Basisabschnitt (34) eine Einfügebohrung (34h), durch welche die rotierende Antriebswelle (52) eingefügt wird, und eine Mehrzahl weiterer zurückgesetzter Abschnitte (38) beinhaltet, welche auf der Oberfläche seitens des Gehäuses der rotierenden Antriebswelle ausgebildet sind.

4. Rotierende elektrische Maschineneinheit nach einem der Ansprüche 1 bis 3, wobei der Basisabschnitt (34) eine Mehrzahl von Lamellen (60) beinhaltet, die an einem Teilbereich vorgesehen sind, welcher einen Teilbereich der Wand darstellt, die den Weg (A) für die Kühlungsluft bildet.

5. Rotierende elektrische Maschineneinheit nach einem der Ansprüche 1 bis 4, wobei
ein Anschlussstück (71A, 71B, 71C), das auf der Steuerplatine (32) angebracht ist, den Basisabschnitt (34) durchdringt und in Richtung des Antriebsabschnitts (10) hervorsteht,
die Spule (11) des Antriebsabschnitts (10) elektrisch mit dem Anschlussstück (71A, 71B, 71C) verbunden ist.

6. Rotierende elektrische Maschineneinheit nach einem der Ansprüche 1 bis 5, wobei ein Sensor (80, 80B), der eine Position der rotierenden Antriebswelle (52) in einer Drehrichtung erfasst, am Basisabschnitt (34) befestigt ist.

## Revendications

1. Unité de machine électrique rotative (1), comprenant :
une section de moteur (10) qui présente un stator (12), autour duquel une bobine (11) est enroulée, un rotor (13) qui fait face au stator (12) et est fixé à un arbre d'entraînement en rotation (52) d'un moteur à combustion interne (50) ; et
une section de commande (30) qui présente une carte de commande (32) qui commande la distribution de puissance au stator (12),
dans laquelle l'unité de machine électrique rotative (1) est utilisée pour entraîner le moteur à combustion interne (50),
**caractérisée en ce que**
la section de commande (30) inclut une section de base (34) qui présente une forme de plaque et est fixée à un boîtier d'arbre d'entraînement en rotation (51) dans lequel l'arbre d'entraînement en rotation (52) est logé,
la section de base (34) est disposée à une position entre le boîtier d'arbre d'entraînement en rotation (51) et la section de moteur (10) et présente une section en retrait (33) qui est formée sur une surface du côté du boîtier d'arbre d'entraînement en rotation et dans laquelle la carte de commande (32) est prévue,
la section en retrait (33) est entourée par une partie de la section de base (34) au niveau du côté de la section de moteur (10) et une section de paroi périphérique (35) qui se dresse à partir de la section de base (34) vers le côté du moteur (50), et
la section de base (34) s'étend d'une position au niveau d'une partie d'extrémité du boîtier d'arbre d'entraînement en rotation (51) jusqu'à l'entour d'un cylindre (53) du moteur à combustion interne (50), et constitue une partie d'une paroi qui forme une surface de paroi intérieure (Aw) d'un trajet (A) pour un air de refroidissement devant être introduit dans le cylindre (53).

2. Unité de machine électrique rotative selon la revendication 1, dans laquelle :
la section de base (34) inclut un connecteur côté carte (37) auquel un connecteur prévu au niveau d'un faisceau externe est connecté, et
une partie d'extrémité du connecteur côté carte (37) fait saillie depuis la surface du côté du boîtier d'arbre d'entraînement en rotation de la section de base (34).

3. Unité de machine électrique rotative selon la revendication 1 ou 2, dans laquelle
la section de base (34) inclut un trou d'insertion (34h) à travers lequel l'arbre d'entraînement en rotation (52) est inséré, et une pluralité d'autres sections en retrait (38) formées sur la surface au niveau du côté du boîtier d'arbre d'entraînement en rotation.

4. Unité de machine électrique rotative selon l'une quelconque des revendications 1 à 3, dans laquelle la section de base (34) inclut une pluralité d'ailettes (60) qui sont prévues au niveau d'une partie qui constitue une partie de la paroi qui forme le trajet (A) pour l'air de refroidissement.

5. Unité de machine électrique rotative selon l'une quelconque des revendications 1 à 4, dans laquelle :
une borne (71A, 71B, 71C) montée sur la carte de commande (32) pénètre à travers la section de base (34) et fait saillie vers la section de moteur (10),
la bobine (11) de la section de moteur (10) est connectée électriquement à la borne (71A, 71B, 71C).

6. Unité de machine électrique rotative selon l'une quelconque des revendications 1 à 5, dans laquelle un capteur (80, 80B) qui détecte une position de l'arbre d'entraînement en rotation (52) dans une direction de rotation est fixé à la section de base (34).
